# EUROPÄISCHE PATENTSCHRIFT

(11) **EP 3 025 078 B1**
(45) Veröffentlichungstag und Bekanntmachung des Hinweises auf die Patenterteilung: **28.02.2018**
(21) Anmeldenummer: 14738445.7
(22) Anmeldetag: 02.07.2014
(51) Int. Cl.: F16J 15/12

(54) **TRÄGERRAHMENDICHTUNG MIT EINEM KANALBEREICH**
CARRIER FRAME SEAL HAVING A CHANNEL REGION
JOINT D'ÉTANCHÉITÉ À CADRE SUPPORT COMPORTANT UNE PARTIE CANAL

(30) Priorität: 25.07.2013 DE 102013214507
(43) Veröffentlichungstag der Anmeldung: 01.06.2016
(73) Patentinhaber: Federal-Mogul Sealing Systems Gmbh, 57562 Herdorf (DE)
(72) Erfinder: SALAMEH, Ralf, 75053 Gondelsheim (DE)
(74) Vertreter: Becker Kurig Straus
(86) Internationale Anmeldenummer: PCT/EP2014/064013
(87) Internationale Veröffentlichungsnummer: WO 2015/010863

(56) Entgegenhaltungen:
- DE-A1- 10 155 806
- GB-A- 836 669
- GB-A- 1 116 289
- US-A1- 2005 285 353

## Beschreibung

Die vorliegende Erfindung betrifft eine Trägerrahmendichtung mit einem Kanalbereich, in dem ein Dichtprofils verläuft, wobei der Kanalbereich und eventuell das Dichtprofil in dem Kanalbereich breiter sind als das Dichtprofil außerhalb des Kanalbereichs.

Im Bereich von Dichtungen für Verbrennungsmotoren werden häufig Trägerrahmendichtungen verwendet. Bei diesen ist ein Dichtprofil aus Elastomer an einem Trägerrahmen anvulkanisiert, wodurch die Dichtung eine gute Handhabbarkeit aufweist. Zusätzlich können an einem Trägerelement viele verschiedene Dichtbereiche angebracht werden. Bei Trägerrahmendichtungen wird ein Dichtelement aus Elastomer an einen Trägerrahmen aus Metall anvulkanisiert. Ein weiterer Vorteil von Trägerrahmendichtungen besteht darin, dass Schraubenkräfte durch den Trägerrahmen übertragen werden können, wodurch eine Verpressung eines Dichtelements von den Schraubenkräften entkoppelt wird. Die Schraubenkräfte verlaufen durch den metallischen Trägerrahmen, wobei dieser durch seine Dicke einen Dichtspalt begrenzt. Die Dichtlippen sind aus einem Elastomermaterial und das Dichtprofil ist an das Trägerblech an der Frontseite anvulkanisiert. Die Dichtlippen übernehmen eine Dichtfunktion in dem Dichtspalt, dessen Höhe durch das Trägerblech begrenzt ist. Das Dichtelement bzw. das Dichtprofil ist stirnseitig an das Elastomerprofil anvulkanisiert.

Ein grundsätzlicher Vorteil dieser Dichtungslösungen mit Trägerblechen besteht darin, dass unterschiedlichste Dichtbereiche an einem Trägerblech kombiniert werden können, wobei die Dichtbereiche einstückig zusammenhängend mit dem Trägerblech montiert werden.

Bestimmte Dichtungsanordnungen können es erforderlich machen, dass ein Dichtungselement in kleineren Teilbereichen bis hin zum gesamten Teil zwischen zwei Blechteilen verläuft und von diesen eingeschlossen wird. Diese Bereiche werden hier als "Kanalbereiche" bezeichnet, da die Dichtung vom Trägerblech eingeschlossen wird wie Wasser in einem Kanal. Das bedeutet, dass die Dichtlippen nicht wie bei Standardlösungen einseitig an das Trägerblech angebunden sind, sondern in einem geschlossenen Kanal verlaufen, wobei das Dichtelement aus Elastomer beidseitig durch das Trägerblech begrenzt ist. Weitergehend können bauartbedingt diese Kanalbereiche auch mit abgeprägten Verbindungsstegen verbunden sein, über welche die Dichtlippen dann hinweg verlaufen. Besondere Lösungen zur Ausfahrung der Steggeometrien zur Minimierung der Beanspruchung durch die Verbindungsstege sind aus der Anmeldung DE 102012206775 "Verbindungsstege bei Trägerrahmendichtungen" zu entnehmen. Auch ist aus US 2005/0285353 A1 eine Trägerrahmendichtung, umfassend einen Trägerrahmen, mit einem ersten Bereich und einem zweiten Bereich, wobei in einem Bereich zwischen dem ersten Bereich und dem zweiten Bereich ein Kanalbereich ausgebildet ist, weiter umfassend ein Dichtprofil, das zwischen dem ersten Bereich und dem zweiten Bereich in dem Kanalbereich angeordnet ist, bekannt.

Grundsätzlich bleibt aber das Grundproblem der mangelnden Verformbarkeit von Dichtlippen durch die nicht vorhandene einseitige Ausdehnungsmöglichkeit in den Kanalbereichen. Es besteht daher ein Bedarf, Trägerrahmendichtungen in diesem Aspekt zu verbessern.
Bisher wurden Dichtlippengeometrien, die einseitig an einem Rand angebracht sind, in einer identischen Ausführung durch Kanalbereiche geführt, bei denen sie an beiden Seiten des Kanals anvulkanisiert werden. Das betrifft speziell die wesentlichen Gestaltungsmerkmale der Dichtlippen sowie das Dichtprofildesign. Ein ganz wesentlicher Baustein der Profilauslegung besteht bei mehreren Dichtlippen in dem Abstand der Dichtlippen zueinander. Ein weiterer Aspekt der Profilauslegung besteht in den konstruktiv vorgesehenen Freiräumen, in die sich das Profil bzw. das Elastomer des Profils hinein verformen kann. Diese Merkmale wurden bisher unverändert im Profil durch die Kanalbereiche geführt. Ausführungen mit mehreren Dichtlippen, bei denen die Dichtlippen mit einem konstanten Abstand zueinander und mit gleichen Freiraumbereichen zwischen den Profilen durch die Kanalbereiche geführt werden, bilden zur Zeit den Stand der Technik.
Es wurde beobachtet, dass Dichtlippen, die in einem Kanal verlaufen, zu einer stärkeren Materialalterung und Überbeanspruchung neigen, was zu einem frühen Ausfall oder zur Leckage führen kann.
Dieser Effekt tritt besonders stark auf, wenn Verbindungsstege, die die einzelnen Blechsegmente miteinander verbinden, durch einen Dichtbereich verlaufen. Diese Verbindungsstege, welche dann lokal unter den Dichtlippen angeordnet sind, schränken die Flexibilität noch weiter ein, was wiederum einen höheren Verschleiß bedingt.
Dieses Problem wird gelöst durch eine Trägerrahmendichtung mit einem Trägerrahmen, der mindestens einen ersten Trägerrahmenbereich und einen zweiten Trägerrahmenbereich und ein Dichtprofil umfasst. In der Trägerrahmendichtung ist zwischen dem ersten Trägerrahmenbereich und dem zweiten Trägerrahmenbereich mindestens ein Kanalbereich ausgebildet. Das Dichtprofil verläuft zum Teil zwischen dem ersten Trägerrahmenbereich und dem zweiten Trägerrahmenbereich in dem Kanalbereich bzw. ist darin angeordnet. Das Dichtprofil ist außerhalb des Kanalbereichs (nur) einseitig mit dem ersten oder dem zweiten Trägerrahmenbereich verbunden. Weiterhin ist eine Breite des Kanalbereichs größer als eine Breite des Dichtprofils außerhalb des Kanalbereichs.

Die Breite des Kanalbereichs liegt in der Größenordnung der Breite des Dichtprofils. Der Kanalbereich ist nicht beliebig breiter, sondern lediglich 1,2 bis maximal 3-mal breiter als ein Dichtprofil, das außerhalb eines Kanalbereichs verläuft. Der Kanalbereich ist durch zwei im Wesentlichen parallel verlaufende Blechkanten definiert, zwischen denen das Dichtprofil ebenfalls (im Wesentlichen) parallel verläuft. Ein Kanalbereich kann eine Länge von mindestens 3-mal der Breite des Dichtprofils bzw. des Dichtelements aufweisen. Bei schmaleren Kanalstücken ist es möglich, dass das Dichtprofil seitlich aus dem Kanal ausweichen kann.

Das der Erfindung zugrundeliegende Problem wird durch einen Gegenstand mit dem Merkmalen des Anspruchs 1 gelöst, vorteilhafte Ausführungsformen sind in den abhängigen Ansprüchen beschrieben.

Die erfindungsgemäße Ausführung besteht darin, dass eine neuartige Gestaltung der Dichtlippen und/oder der Kanalbreite angewendet wird, um eine Verbesserung der Verformbarkeit und Flexibilität der Dichtlippen in den Kanalbereichen zu gewährleisten. Ziel ist es hierbei, die eingeschränkte Flexibilität, die sich im Kanalbereich durch die beidseitige metallische Begrenzung ergibt, weitgehend auszugleichen. Die normale Auslegung einer Dichtung berücksichtigt einen Freiraum für die Verpressung der Dichtlippen. Der Freiraum sollte so groß sein, dass das Elastomervolumen der Dichtlippen bei einer Verpressung in eine Richtung von dem Trägerrahmen weg ausweichen kann. Zusätzlich wird typischerweise noch Freiraum für Toleranzfälle, eine thermische Ausdehnung und eventuell eine Quellung des Elastomers vorgehalten. Dieser Freiraum wird entsprechend für ein einlippiges aber auch mehrlippiges Dichtprofil ermittelt.

Erfindungsgemäß verläuft das Dichtprofil nun durch einen Kanal, der breiter ist als das angespritzte bzw. anvulkanisierte Elastomerprofil außerhalb des Kanals. Somit ist entweder das Dichtprofil in dem Kanal breiter ausgestaltet und/oder das Dichtprofil füllt nicht die gesamte Breite des Kanals aus.

Im ersten Fall wird es den Dichtlippen durch einen größeren Abstand und durch größere Freiräume ermöglicht, sich weiter zu verformen. Die Freiräume in dem Kanal gehen über die ermittelten Werte für ein einseitig befestigtes Dichtprofil hinaus. Dies wird dadurch erreicht, dass die für die Verformung notwendigen Freiräume vor und hinter dem Profil der Dichtlippen in den Kanalbereichen erweitert sind und nach den Kanalbereichen wieder auf eine normale Breite für Freiräume verringert werden. Der zusätzliche Freiraum wird bei einlippigen Profilen geschaffen, indem die Kanalbreite vergrößert wird und vor und hinter der Dichtlippe ein vergrößerter Freiraum vorgesehen wird.

Bei Dichtprofilen mit mehreren Dichtlippen vergrößert sich der Abstand zwischen den Dichtlippen in den Kanalbereich. Damit weisen die Dichtlippen in dem bzw. den Kanalbereich(en) einen größeren Abstand zueinander auf als in den Nicht-Kanalbereichen. Durch den größeren Abstand in dem Kanalbereich hat das Elastomer auch zwischen den Profilen mehr Freiraum, um sich verformen zu können.

Der Freiraum für die Dichtlippen wird mit dieser Maßnahme über den normalerweise berechneten oder ermittelten notwendigen Freiraum hinaus erhöht, um eine bessere Verformbarkeit und somit Reduzierung der Belastung zu erreichen, da das Profil in den Kanalbereichen keine Möglichkeit hat, in Richtung von dem Trägerrahmen weg auszuweichen.

Ein anderer Ansatz besteht darin, dem Dichtprofil in dem Kanal eine Möglichkeit zu geben, auszuweichen. Dabei wird insbesondere der Kanalbereich breiter als die Elastomerdichtung ausgeführt. In dieser Ausführungsform verlaufen Stege durch das Dichtungsmaterial und können so den Kanalbereich stabilisieren. In dieser Ausführungsform ist der erste Trägerrahmenbereich weniger starr mit dem zweiten Trägerrahmenbereich verbunden, da die Stege nicht durch eine durchgehende Elastomerschicht stabilisiert werden.

In einer beispielhaften Ausführungsform der Trägerrahmendichtung ist das Dichtprofil in dem Kanalbereich an einer Seite mit dem ersten Trägerrahmenbereich und auf der anderen Seite mit dem zweiten Trägerrahmenbereich verbunden. In dieser Ausführungsform füllt das Dichtelement bzw. das Dichtprofil den Kanalbereich in der gesamten Breite aus. Da der Kanalbereich breiter ist als das Dichtprofil außerhalb des Kanalbereichs, ist das Dichtprofil im Kanalbereich ebenfalls breiter als außerhalb des Kanalbereichs. Indem die Dichtlippen des Dichtprofils im Wesentlichen nicht verändert werden und die Abstände zwischen den Dichtlippen bzw. den Dichtlippen und dem Rand des Dichtprofils vergrößert werden, können sich die Dichtlippen besser verformen und verschleißen nicht so stark.
In einer weiteren beispielhaften Ausführungsform der Trägerrahmendichtung ist das Dichtprofil in dem Kanalbereich nur an einer Seite mit dem ersten Trägerrahmenbereich oder dem zweiten Trägerrahmenbereich verbunden. Da der Kanalbereich breiter ausgeführt ist, kann sich das Dichtprofil bei Belastung weiter in den Kanalbereich hinein erstrecken, wodurch die Belastung für die Dichtlippen beträchtlich verringert werden kann.
In einer anderen beispielhaften Ausführungsform der Trägerrahmendichtung umfasst das Dichtprofil mindestens zwei Dichtlippen, wobei ein Abstand zwischen jeweils zwei der Dichtlippen in dem Kanalbereich größer ist als außerhalb des Kanalbereichs. Erst durch den größeren Abstand der Dichtlippen zueinander können im Falle mehrerer Dichtlippen diese in dem Kanalbereich besser seitlich ausweichen. Eine Ausweichbewegung des Elastomers einer Dichtlippe im Kanalbereich wird hier nicht mehr durch weitere Dichtlippen eingeschränkt.
In einer weiteren beispielhaften Ausfiihrungsform der Trägerrahmendichtung ist ein Abstand zwischen jeweils zwei der Dichtlippen in dem Kanalbereich 1,2-Mal bis zweieinhalbmal so groß, bevorzugt etwa 1,3-Mal bis doppelt so groß, und weiter bevorzugt etwa 1,4-Mal bis eineinhalbmal so groß, wie ein Abstand zwischen den jeweiligen Dichtlippen außerhalb des Kanalbereichs. Dieser Anspruch definiert einen Abstand der Dichtlippen im Kanalbereich im Vergleich zu einem Abstand der Dichtlippen außerhalb des Kanalbereichs. Ein Faktor von etwa 1,5 (+/-20%) kann dabei als Richtwert dienen. Ein Faktor von etwa 1,5 (+/-10%) als Breiten- bzw. Abstandsvariation ist ebenfalls erstrebenswert. Dieser Aspekt betrifft dabei lediglich den Abstand der einzelnen Dichtlippen zueinander. Die Breite des Kanals kann auch eineinhalbmal bis zweimal so groß sein wie die Breite des Dichtelementes außerhalb des Kanalbereichs.

In einer zusätzlichen beispielhaften Ausführungsform der Trägerrahmendichtung ist wenn das Dichtprofil mindestens zwei Dichtlippen umfasst, und wenn ein Abstand zwischen den mindestens zwei Dichtlippen in dem Kanalbereich größer ist als außerhalb des Kanalbereichs, eine Breite des Dichtprofils, d. h. die Gesamtbreite des Dichtprofils, in dem Kanalbereich größer als die Breite des Dichtprofils außerhalb des Kanalbereichs.
In einer anderen beispielhaften Ausfiihrungsform der Trägerrahmendichtung ist eine Breite des Dichtprofils in dem Kanalbereich eineinhalb- bis zweieinhalbmal, bevorzugt etwa doppelt so groß, wie eine Breite des Dichtprofils außerhalb des Kanalbereichs. Auch hier kann ein Faktor von etwa 2 (+/-20%) als Richtwert dienen. Ein Faktor von etwa 2 (+/-10%) kann als Breitenvariation ebenfalls erstrebenswert sein. Dieser Aspekt betrifft dabei die Gesamtbreite des Dichtprofils. Die Breite des Kanals ist mindestens 1,2-Mal bis maximal zweieinhalbmal so groß, bevorzugt etwa 1,3-Mal bis doppelt so groß, und weiter bevorzugt etwa 1,4-Mal bis eineinhalbmal so groß, wie eine Breite des Dichtprofils außerhalb des Kanalbereichs.

In einer weiteren beispielhaften Ausführungsform der Trägerrahmendichtung ist die Dichtlippe oder sind die Dichtlippen im Querschnitt symmetrisch aufgebaut. Bei symmetrischen Profilen wird im Allgemeinen aus Sicht des Trägerrahmens vor und hinter den Profilen ein gleich großer Freiraum eingebracht.

In einer zusätzlichen beispielhaften Ausführungsform der Trägerrahmendichtung sind die Freiräume in dem Dichtprofil neben der Dichtlippe oder neben den Dichtlippen gleich breit ausgeführt. Diese Ausführung ist besonders für im Querschnitt symmetrisch ausgeführte Dichtlippen geeignet.

In einer anderen beispielhaften Ausführungsform der Trägerrahmendichtung ist die Dichtlippe oder sind die Dichtlippen im Querschnitt asymmetrisch aufgebaut. Asymmetrisch aufgebaute Dichtlippen sind insbesondere für größere Druckunterschiede oder bei Medien mit unterschiedlichen Viskositäten geeignet.

In einer weiteren beispielhaften Ausführungsform der Trägerrahmendichtung unterscheidet sich ein Freiraum vor der oder den Dichtlippen von einem Freiraum hinter der oder den Dichtlippen in Bezug auf seine Breite. Bei asymmetrischen Profilen wird die Hauptverformungsrichtung berücksichtigt. Ein Freiraum, der in der Hauptverformungsrichtung liegt, ist dabei größer bzw. breiter ausgeführt.

In einer zusätzlichen beispielhaften Ausführungsform der Trägerrahmendichtung ist der Trägerrahmen aus Eisenwerkstoff, wie Stahl oder anderen Metallwerkstoffen, gefertigt. In einer weiteren zusätzlichen beispielhaften Ausführungsform der Trägerrahmendichtung umfasst der Trägerrahmen Aluminium. In einer zusätzlichen beispielhaften Ausführungsform ist der Trägerrahmen der Trägerrahmendichtung aus Kunststoffmaterialien hergestellt. In einer anderen zusätzlichen beispielhaften Ausführungsform der Trägerrahmendichtung ist der erste Trägerrahmenbereich aus Stahl und der zweite Trägerrahmenbereich aus Aluminium gefertigt. In einer weiteren anderen beispielhaften Ausführungsform der Trägerrahmendichtung umfasst der erste Trägerrahmenbereich Stahl und der zweite Trägerrahmenbereich umfasst einen anderen Metallwerkstoff. In einer zusätzlichen weiteren beispielhaften Ausführungsform der Trägerrahmendichtung umfasst der erste Trägerrahmenbereich Stahl und der zweite Trägerrahmenbereich umfasst Kunststoff oder einen Verbundwerkstoff. Hier werden die Begriffe Eisenwerkstoff und Stahl synonym verwendet. Der Begriff "Kunststoff" soll hier so ausgelegt werden, dass er ebenfalls Verbundwerkstoffe umfasst.

In einer anderen zusätzlichen beispielhaften Ausführungsform der Trägerrahmendichtung ist der erste Trägerrahmenbereich aus Aluminium und der zweite Trägerrahmenbereich ist aus Stahl gefertigt. In einer weiteren anderen beispielhaften Ausführungsform der Trägerrahmendichtung umfasst der erste Trägerrahmenbereich Aluminium und der zweite Trägerrahmenbereich umfasst einen anderen Metallwerkstoff. In einer zusätzlichen weiteren beispielhaften Ausführungsform der Trägerrahmendichtung umfasst der erste Trägerrahmenbereich Aluminium und der zweite Trägerrahmenbereich umfasst Kunststoff oder einen Verbundwerkstoff.

In einer anderen zusätzlichen beispielhaften Ausführungsform der Trägerrahmendichtung ist der erste Trägerrahmenbereich aus einem anderen Metallwerkstoff und der zweite Trägerrahmenbereich aus Stahl gefertigt. In einer weiteren anderen beispielhaften Ausführungsform der Trägerrahmendichtung umfasst der erste Trägerrahmenbereich einen anderen Metallwerkstoff und der zweite Trägerrahmenbereich umfasst Aluminium. In einer zusätzlichen weiteren beispielhaften Ausfiihrungsform der Trägerrahmendichtung umfasst der erste Trägerrahmenbereich einen anderen Metallwerkstoff und der zweite Trägerrahmenbereich umfasst Kunststoff oder einen Verbundwerkstoff.

In einer anderen zusätzlichen beispielhaften Ausfiihrungsform der Trägerrahmendichtung ist der erste Trägerrahmenbereich aus Kunststoff oder einem Verbundwerkstoff und der zweite Trägerrahmenbereich ist aus Stahl gefertigt. In einer weiteren anderen beispielhaften Ausführungsform der Trägerrahmendichtung umfasst der erste Trägerrahmenbereich einen Kunststoff oder einen Verbundwerkstoff und der zweite Trägerrahmenbereich umfasst Aluminium. In einer zusätzlichen weiteren beispielhaften Ausführungsform der Trägerrahmendichtung umfasst der erste Trägerrahmenbereich Kunststoff oder einen Verbundwerkstoff und der zweite Trägerrahmenbereich umfasst einen anderen Metallwerkstoff.

In einer anderen beispielhaften Ausführungsform der Trägerrahmendichtung sind der erste Trägerrahmenbereich und der zweite Trägerrahmenbereich über einen durchgehenden Steg miteinander verbunden, wobei auf beiden Seiten des Trägerrahmens bzw. des Stegs das Dichtprofil in einer kanalförmigen Vertiefung verläuft. Hier ist der Kanalbereich lediglich in den Trägerrahmen eingefräst oder eingeprägt und das Dichtprofil verläuft jeweils in dem Kanal.

In einer weiteren anderen beispielhaften Ausführungsform der Trägerrahmendichtung sind der erste Trägerrahmenbereich und der zweite Trägerrahmenbereich über Stege miteinander verbunden, wobei die Stege bevorzugt schräg zu dem Dichtprofil bzw. den Dichtlippen verlaufen. Diese Stege sind eher schmal ausgeführt. Diese Stege können eine Art Fachwerkverbindung bilden, die auch bei wenigen Stegen zusammen mit dem Dichtelement eine relativ stabile Verbindung zwischen dem ersten Trägerrahmenbereich und der zweite Trägerrahmenbereich bereitstellt. Durch den schrägen Verlauf der Stege wird eine Bewegung des Dichtprofils wesentlich weniger eingeschränkt als im Fall von Stegen, die senkrecht zu dem Dichtprofil bzw. den Dichtlippen verlaufen.

In einer weiteren beispielhaften Ausführungsform der Trägerrahmendichtung ist das Dichtprofil stirnseitig an dem Trägerrahmen bzw. an dem ersten Trägerrahmenbereich bzw. dem zweiten Trägerrahmenbereich bzw. an beiden, dem ersten und dem zweiten Trägerrahmenbereich, anvulkanisiert oder angespritzt.

In einer zusätzlichen beispielhaften Ausführungsform der Trägerrahmendichtung ist der zweite Trägerrahmenbereich aus Stahl gefertigt und kann eine Dichtsicke, eine Elastomerdichtung oder ein Filterelement umfassen.

Im Folgenden wird die Erfindung anhand von schematischen Figuren beschrieben.
Figur 1 zeigt einen Querschnitt durch eine herkömmliche Trägerrahmendichtung.
Figur 2 zeigt einen Querschnitt eines Kanalbereichs einer herkömmlichen Trägerrahmendichtung.
Figur 3 zeigt einen Querschnitt eines Kanalbereichs einer erfindungsgemäßen Trägerrahmendichtung.
Figuren 3A und 3B zeigen den Querschnitt von Figur 3 mit einem Steg und einer anderen Dichtlippenform.
Figur 3C stellt einen Querschnitt eines Kanalbereichs einer anderen Ausführungsform einer erfindungsgemäßen Trägerrahmendichtung dar.
Figur 4 zeigt eine Aufsicht auf eine Ausführungsform einer erfindungsgemäßen Trägerrahmendichtung.
Figur 4A zeigt eine Aufsicht auf eine andere Ausführungsform einer erfindungsgemäßen Trägerrahmendichtung.

Im Folgenden wird die Erfindung anhand von schematischen Figuren beschrieben, wobei sowohl in der Zeichnung als auch in der Beschreibung der Figuren gleiche Bezugszeichen verwendet werden, um gleiche oder ähnliche Komponenten zu bezeichnen.

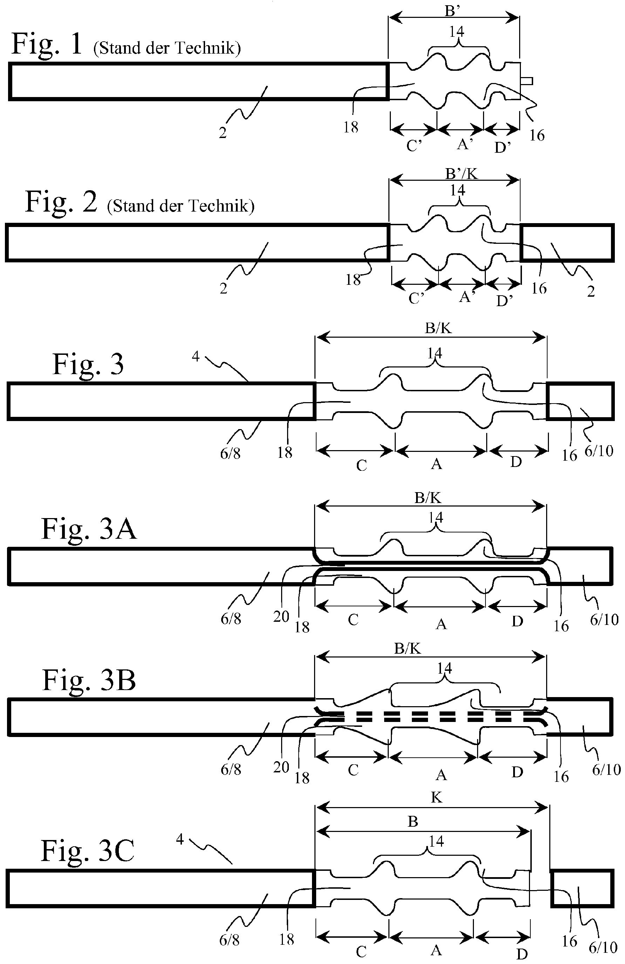

Figur 1 zeigt einen Querschnitt durch eine herkömmliche Trägerrahmendichtung 2. An dem Trägerrahmen ist einseitig ein Dichtprofil 14 aus einem Elastomermaterial 18 angespritzt oder anvulkanisiert. Das Dichtprofil 14 wird dabei von zwei Freiräumen begrenzt und wird durch zwei parallel verlaufende Dichtlippen 16 gebildet. Das Dichtelement weist außerhalb eines Kanals eine Breite von B' auf. Die Dichtlippen 16 sind mit einem Abstand A zueinander angeordnet und die Freiräume weisen außerhalb eines Kanalbereichs eine Breite von C' bzw. D' auf. Auch wenn die Figuren lediglich schematisch dargestellt sind, so sind die Abmessungen A bis D in allen Figuren in Bezug auf Figur 1 maßstabgerecht dargestellt.

Figur 2 zeigt einen Querschnitt eines Kanalbereichs einer herkömmlichen Trägerrahmendichtung im Bereich eines Kanals. Der Kanal weist eine Breite K auf, die genau der Breite B' des Dichtelements entspricht. Aus der Kombination der Figuren 1 und 2 ist zu erkennen, dass die Gesamtbreite des Dichtelements im Kanalbereich gleich der Breite des Dichtelements außerhalb des Kanalbereichs (siehe Figur 1) ist. Die Dichtlippen 16 sind wie in Figur 1 in dem Abstand A' zueinander angeordnet und die Freiräume weisen auch innerhalb des Kanalbereichs eine Breite von C' bzw. D' auf, die derjenigen außerhalb des Kanals entspricht.

Figur 3 zeigt einen Querschnitt eines Kanalbereichs einer erfindungsgemäßen Trägerrahmendichtung 4 in einem Kanalbereich. Der Trägerrahmen 6 umfasst einen ersten Trägerrahmenbereich 8 und einen zweiten Trägerrahmenbereich 10, zwischen denen ein Kanal mit der Breite K gebildet ist. Die Breite des Dichtelements B in dem Kanalbereich entspricht der Breite des Kanals K. Die Kombination der Figuren 1 und 3 lässt erkennen, dass sich die Gesamtbreite B des Dichtelements im Kanalbereich im Vergleich zu der Breite des Dichtelements außerhalb des Kanalbereichs B von Figur 1 etwa verdoppelt hat. Die Dichtlippen weisen einen Abstand A auf, der doppelt so groß ist wie der entsprechende Abstand A in den Figuren 1 oder 2. Die Freiräume C und D sind ebenfalls etwa doppelt so groß ausgeführt wie die entsprechenden Abstände C' und D' in den Figuren 1 oder 2.

Auch wenn die Dichtlippen 16 in der Figur die gleichen Abmessungen wie in den Figuren 1 und 2 aufweisen, können sie aufgrund der größeren Freiräume C und D besser ausweichen und werden dadurch weniger stark belastet.

Figur 3A entspricht der Figur 3. Im Unterschied zu der Figur 3 umfasst der Kanal in Figur 3A einen durchgehenden Steg. In dieser Ausführungsform wird der Kanal durch zwei Vertiefungen gebildet, in die das Dichtelement mit dem Dichtprofil eingelassen ist. Der Steg verringert zusätzlich zu den Rändern des Kanals die Beweglichkeit des Elastomers.

In Figur 3B ist der Querschnitt von Figur 3 mit einem schmalen Steg 20 und einer anderen Dichtlippenform dargestellt. Der Steg kann in Figur 3B schräg verlaufen und so die Beweglichkeit des Dichtelements weniger stark gering einschränken als im Fall von Figur 3A.

Figur 3C stellt einen Querschnitt eines Kanalbereichs einer anderen Ausführungsform einer erfindungsgemäßen Trägerrahmendichtung dar. In Figur 3C ist der Kanal breiter als das Dichtelement ausgeführt. Der Kanal bietet somit einen Bereich, in den das Dichtelement ausweichen kann, wenn die Dichtlippen 16 durch einen Kontakt mit Dichtflächen zusammengedrückt werden. In Figur 3C sind die Dichtlippen 16 asymmetrisch ausgeführt. Die asymmetrischen Dichtlippen erfordern es, dass die Freiräume C und D asymmetrisch, d. h. unterschiedlich breit, ausgeführt werden. Der Freiraum C ist viel breiter ausgeführt als der Freiraum D. Die Dichtlippen 16 weisen im Querschnitt die Form eines Sägezahns auf.

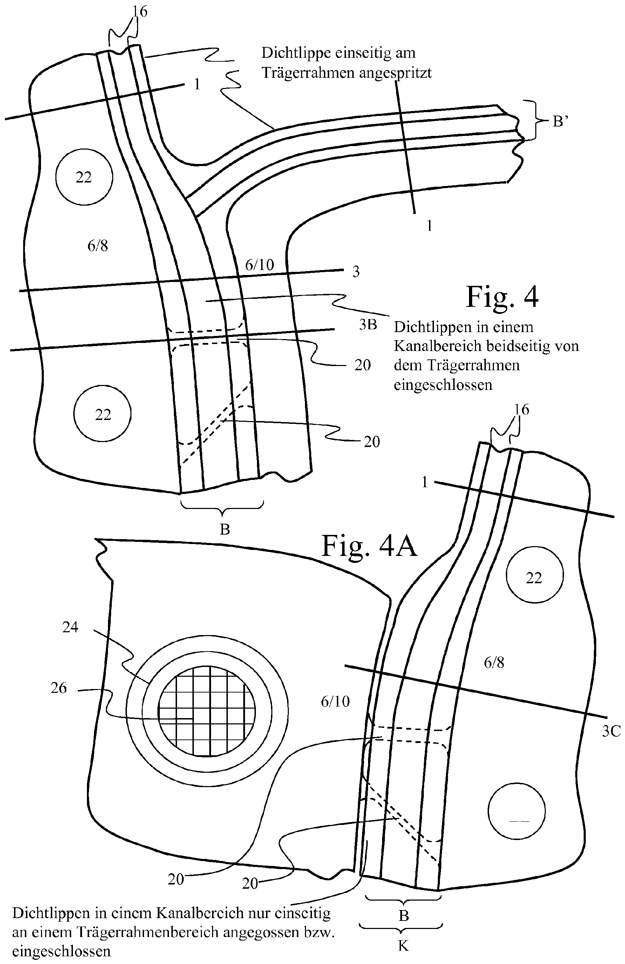

Figur 4 zeigt eine Aufsicht auf eine Teilansicht einer Ausführungsform einer erfindungsgemäßen Trägerrahmendichtung. Die Flachdichtung von Figur 4 umfasst einen ersten Trägerrahmenbereich 6/8 und einen zweiten Trägerrahmenbereich 6/10. Zwischen dem ersten Trägerrahmenbereich 6/8 und dem zweiten Trägerrahmenbereich 6/10 ist ein Kanal gebildet. Die Linien 16 bezeichnen den Verlauf der Dichtlippen 16. Die Linien 1 stellen Schnittlinien dar, die im Querschnitt der in der Figur 1 dargestellten Schnittansicht entsprechen. Die Linien 3 und 3B entsprechen den Schnittansichten der Figuren 3 und 3B (jeweils mit symmetrischen Dichtlippen).

In Figur 4 bildet der zweite Trägerrahmenbereich 6/10 einen eigenen abzudichtenden Bereich. In Figur 4 ist klar zu erkennen, dass der Kanalbereich deutlich breiter ist als ein nur einseitig angespritztes Elastomerelement an den Stellen 1. Die Breite des Elastomerelements außerhalb des Kanals beträgt wie in Figur 1 die Breite B'. Der Kanal ist deutlich breiter ausgeführt und das Dichtelement füllt mit der Breite B den gesamten Kanal. Die Dichtlippen verändern ihren Abstand beim Übergang von dem Kanalbereich zu den an den Kanalbereich angrenzenden Bereichen. Die Stege 20 können senkrecht oder schräg zu den Dichtlippen 16 verlaufen. Der erste Trägerrahmenbereich 6/10 ist mit Durchgangslöchern 22 für Befestigungsschrauben oder zum Ausrichten der Dichtung versehen.

Figur 4A zeigt eine Teil-Aufsicht auf eine Ausführungsform einer erfindungsgemäßen Trägerrahmendichtung. In Figur 4A bildet nur der erste Trägerrahmenbereich 6/8 einen eigenen abzudichtenden Bereich. In Figur 4A ist der Kanalbereich deutlich breiter ist als ein nur einseitig angespritztes Elastomerelement im Bereich der Schnittlinie 1. Die Breite des Elastomerelements außerhalb des Kanals entspricht der Breite des Elastomerelements von Figur 1. Der Kanal ist deutlich breiter ausgeführt. Das Dichtelement ist in dem Kanalbereich nur einseitig mit dem ersten Trägerrahmenbereich 6/8 verbunden. Das Dichtelement füllt mit der Breite B nicht den gesamten Kanal. Der Abstand der Dichtlippen 16 wird beim Übergang in den Kanalbereich vergrößert. Hier stören lediglich die Stege 20 eine Ausweichbewegung des Dichtelements in Richtung des zweiten Trägerrahmenbereichs 6/10. Daher könnte die Breite des Dichtelements im Kanalbereich deutlich kleiner ausfallen als in Figur 4, wobei die Breite des Kanals jedoch der Breite von Figur 4 entspricht.

In Figur 4A bildet der zweite Trägerrahmenbereich 6/10 keinen eigenen abzudichtenden Bereich und kann hier dazu dienen, ein mit einer Dichtsicke 24 oder einer eigenen Elastomerdichtung abgedichtetes Filterelement 26 zu tragen.

Ein erfindungsgemäßer Aspekt besteht darin, eine Verbesserung der Verformbarkeit und Flexibilität der Dichtlippen in den Kanalbereichen zu erreichen, indem eine neuartige Gestaltung der Dichtlippen und ein breiterer Kanal verwendet werden. Das Ziel ist, die eingeschränkte Flexibilität in Kanalbereichen mit beidseitigen metallischen Begrenzungen weitgehend auszugleichen. Bei einer normalen Auslegung einer Dichtung wird ein Freiraum vorgesehen, der es den Dichtlippen gestattet, sich zu verformen. Eine Verformung der Dichtlippen führt zu einer Verlagerung des Elastomervolumens der Dichtlippen, wenn die Dichtung zwischen Dichtflächen eingespannt wird.

Zusätzlich wird es notwendig, Freiräume für Toleranzen, thermische Ausdehnung und eventuell Quellung des Dichtungsmaterials vorzusehen. Dieser Freiraum wird entsprechend für ein Profil mit einer oder mehreren Dichtlippen ermittelt. Ein so erstelltes Profil verläuft in den normalen angespritzten Bereichen (Figur 1) und im Kanalbereich (Figur 2), ohne dass sich die Abstände und somit der Freiraum zwischen zwei Dichtlippen ändern, auch unabhängig davon, ob das Dichtprofil durch einen Kanalbereich geführt wird oder nicht.

Erfindungsgemäß wird der Kanal breiter ausgeführt, um dem Dichtprofil mehr Raum zu geben, damit es sich besser verformen kann. Die Freiräume und der Abstand A der Dichtlippen 16 sind in dem Kanalbereich breiter ausgeführt. Das Dichtelement bzw. das Dichtprofil 14 wird vor Kanalbereichen verbreitert und läuft nach Kanalbereichen wieder zusammen, um die größeren Freiräume in den Kanalbereichen zu gewährleisten.

Dieser zusätzliche Freiraum wird dadurch geschaffen, dass bei Profilen mit einer Dichtlippe die Kanalbreite vergrößert wird und vor und hinter der Dichtlippe jeweils ein vergrößerter Freiraum eingebracht wird. Bei mehrlippigen Profilen verlaufen die Dichtlippen in den Kanalbereichen mit einem größeren Abstand zueinander als außerhalb der Kanalbereiche. Durch den größeren Abstand zwischen den Dichtlippen kann so ein größerer Freiraum auch zwischen den Dichtlippen freigegeben werden. Bei symmetrischen Profilen wird im Allgemeinen ein gleich großer Freiraum vor und hinter den Profilen eingebracht. Im Fall von asymmetrischen Profilen wird die Hauptverformungsrichtung berücksichtigt. Der größere Freiraum wird dann in Richtung der Hauptverformungsrichtung vorgesehen.

Der Freiraum für die Dichtlippen wird mit dieser Maßnahme über den normalerweise kalkulatorisch notwendigen Freiraum hinaus erhöht, um eine bessere Verformbarkeit und somit Reduzierung der Belastung zu erreichen, da das Profil in den Kanalbereichen keine Möglichkeit hat, vom Trägerrahmen weg auszuweichen. Auch wenn, wie in Figur 4A, das Profil in den Kanalbereichen eine Möglichkeit hat, vom Trägerrahmen weg auszuweichen, kann die Breite des Dichtprofils vergrößert werden, da dessen Bewegung durch Befestigungsstege im Kanalbereich eingeschränkt ist.

Bei zwei Dichtlippen ist die technische Ausführung daran zu erkennen, dass die zwei Dichtlippen in dem Bereich, in dem die Dichtlippen durch einen Kanal verlaufen, weiter voneinander entfernt sind, wodurch der Freiraum zwischen den beiden Dichtlippen vergrößert ist.

Bei asymmetrischen Dichtlippen, die sich mehr oder weniger hauptsächlich in eine Richtung verformen, besteht die bevorzugte Lösung darin, den Freiraum in Verformungsrichtung größer zu wählen. Asymmetrische Dichtlippen verformen sich im Allgemeinen zur Medienseite hin, da der flachere Profilwinkel sich an der von der Medienseite abgewandten Seite befindet und der steilere Profilwinkel an der Medienseite vorliegt. Ein schmalerer Freiraum hat den Vorteil, dass insgesamt Bauraum (also Breite) einspart werden kann. D. h. um eine minimale Profilbreite zu erhalten, kann, da sich das Profil eher zur Medienseite hin verformt, der Freiraum D (von Figur 3C) vor den Dichtlippen immer etwas größer ausfallen als der Freiraum C (von Figur 3C) dahinter.

Bei der Ausführung mit einer Dichtlippe ist das Dichtelement bzw. das Dichtprofil so zu ändern, dass die Breiten der Freiräume C und D vor und hinter dem Profil über denen der ermittelten Breiten von Freiräumen liegen, die bei einem einseitig befestigten Dichtelement notwendig sind. Somit ist auch bei einer Ausführung mit nur einer Dichtlippe eine größere Kanalbreite notwendig, um einen entsprechend großen Freiraum hinter und vor der einzigen Dichtlippe zu erhalten.

### Bezugszeichenliste

- 2: herkömmliche Trägerrahmendichtung
- 4: erfindungsgemäße Trägerrahmendichtung
- 6: Trägerrahmen
- 8: erster Trägerrahmenbereich
- 10: zweiter Trägerrahmenbereich,
- 12: Kanalbereich;
- 14: Dichtprofil
- 16: Dichtlippen
- 18: Elastomer
- 20: Steg
- 22: Durchgangsloch
- 24: Dichtsicke
- 26: Filterelement

- A: Abstand der Dichtlippen 14 innerhalb des Kanalbereichs 12
- A': Abstand der Dichtlippen 14 außerhalb des Kanalbereichs 12
- B: Breite des Dichtprofils 12 innerhalb des Kanalbereichs 12
- B': Breite des Dichtprofils 12 außerhalb des Kanalbereichs 12
- C: Freiraum hinter den Dichtlippen 14 innerhalb des Kanalbereichs 12
- C': Freiraum hinter den Dichtlippen 14 außerhalb des Kanalbereichs 12
- D: Freiraum vor den Dichtlippen 14 innerhalb des Kanalbereichs 12
- D': Freiraum vor den Dichtlippen 14 außerhalb des Kanalbereichs 12
- K: Breite des Kanalbereichs 12

- 1, 3, 3A, 3C: Verweise auf die Schnittansichten in den Figuren 1, 3, 3A, 3C

## Patentansprüche

1. Trägerrahmendichtung (4), umfassend:
einen Trägerrahmen (6), mit mindestens einem ersten Trägerrahmenbereich (8) und einem zweiten Trägerrahmenbereich (10),
wobei in einem Bereich zwischen dem ersten Trägerrahmenbereich (8) und dem zweiten Trägerrahmenbereich (10) ein Kanalbereich (12) ausgebildet ist;
weiter umfassend ein Dichtprofil (14), das zumindest teilweise zwischen dem ersten Trägerrahmenbereich (8) und dem zweiten Trägerrahmenbereich (10) in dem Kanalbereich (12) angeordnet ist, und wobei das Dichtprofil (14) außerhalb des Kanalbereichs (12) einseitig mit dem ersten oder dem zweiten Trägerrahmenbereich (8, 10) verbunden ist, und
wobei eine Breite (K) des Kanalbereichs (12) größer ist als an eine Breite (B) des Dichtprofils (14) außerhalb des Kanalbereichs (12), wobei
a) das Dichtprofil in dem Kanalbereich (12) an einer Seite nur mit dem ersten Trägerrahmenbereich (8) oder nur dem zweiten Trägerrahmenbereich (10) verbunden ist, wobei das Dichtprofil mit seiner Breite nicht den gesamten Kanal füllt, und wobei eine Breite (B) des Dichtprofils (14) in dem Kanalbereich (12) größer als die Breite (B') des Dichtprofils (14) außerhalb des Kanalbereichs (12) ist
und/oder wobei
b) das Dichtprofil (14) mindestens zwei Dichtlippen (16) umfasst, und wobei ein Abstand (A) zwischen den mindestens zwei Dichtlippen (16) in dem Kanalbereich (12) größer ist als außerhalb des Kanalbereichs (18).

2. Trägerrahmendichtung (4) gemäß Anspruch 1, wobei wenn das Dichtprofil (14) mindestens zwei Dichtlippen (16) umfasst, und ein Abstand (A) zwischen den mindestens zwei Dichtlippen (16) in dem Kanalbereich (12) größer ist als außerhalb des Kanalbereichs (18),
das Dichtprofil in dem Kanalbereich (12) an einer Seite mit dem ersten Trägerrahmenbereich (8) verbunden ist und auf der anderen Seite mit dem zweiten Trägerrahmenbereich (10) verbunden ist.

3. Trägerrahmendichtung (10) gemäß Anspruch 1,
wobei ein Abstand (A) zwischen den zwei Dichtlippen (16) in dem Kanalbereich (12) eineinhalb- bis zweieinhalbmal, bevorzugt etwa doppelt so groß, ist wie ein Abstand (A') zwischen zwei Dichtlippen (16) außerhalb des Kanalbereichs (112).

4. Trägerrahmendichtung (10) gemäß einem der vorstehenden Ansprüche, wobei wenn das Dichtprofil (14) mindestens zwei Dichtlippen (16) umfasst, und wenn ein Abstand (A) zwischen den mindestens zwei Dichtlippen (16) in dem Kanalbereich (12) größer ist als außerhalb des Kanalbereichs (18), eine Breite (B) des Dichtprofils (14) in dem Kanalbereich (12) größer als die Breite (B') des Dichtprofils (14) außerhalb des Kanalbereichs (12) ist.

5. Trägerrahmendichtung (10) gemäß Anspruch 4,
wobei die Breite des Dichtprofils in dem Kanalbereich (18) 1,2-Mal bis zweieinhalbmal so groß, bevorzugt etwa 1,3-Mal bis doppelt so groß, und weiter bevorzugt etwa 1,4-Mal bis eineinhalbmal so groß, ist wie eine Breite des Dichtprofils (B') außerhalb des Kanalbereichs (18).

6. Trägerrahmendichtung (10) gemäß einem der vorstehenden Ansprüche,
wobei die Dichtlippe (16) oder die Dichtlippen (16) im Querschnitt symmetrisch aufgebaut sind.

7. Trägerrahmendichtung (10) gemäß Anspruch 6,
wobei Freiräume (C, D) in dem Dichtprofil neben der Dichtlippe (16) oder neben den Dichtlippen (16) gleich breit ausgeführt sind.

8. Trägerrahmendichtung (10) gemäß einem der vorstehenden Ansprüche,
wobei die Dichtlippe (16) oder die Dichtlippen (16) im Querschnitt asymmetrisch aufgebaut sind.

9. Trägerrahmendichtung (10) gemäß Anspruch 8,
wobei Freiräume (C, D) in dem Dichtprofil (14) neben der Dichtlippe (16) oder neben den Dichtlippen (16) jeweils eine unterschiedliche Breite aufweisen.

10. Trägerrahmendichtung (4) gemäß einem der vorstehenden Ansprüche,
wobei der Trägerrahmen (6) aus Stahl gefertigt ist, oder
wobei der Trägerrahmen (6) aus Aluminium gefertigt ist, oder
wobei der Trägerrahmen (6) aus anderen metallischen Werkstoffen als Stahl oder Aluminium gefertigt ist,
wobei der Trägerrahmen (6) aus Kunststoff oder einem Verbundwerkstoff gefertigt ist, oder
wobei der erste Trägerrahmenbereich (8) aus Stahl und der zweite Trägerrahmenbereich (10) aus Aluminium gefertigt ist,
wobei der erste Trägerrahmenbereich (8) aus Stahl und der zweite Trägerrahmenbereich (10) aus einem anderen metallischen Werkstoff gefertigt ist,
wobei der erste Trägerrahmenbereich (8) aus Stahl und der zweite Trägerrahmenbereich (10) aus Kunststoff oder einem Verbundwerkstoff gefertigt ist,
wobei der erste Trägerrahmenbereich (8) aus Stahl und der zweite Trägerrahmenbereich (10) aus Aluminium gefertigt ist,
wobei der erste Trägerrahmenbereich (8) aus Aluminium und der zweite Trägerrahmenbereich (10) aus Stahl gefertigt ist,
wobei der erste Trägerrahmenbereich (8) aus Aluminium und der zweite Trägerrahmenbereich (10) aus einem anderen metallischen Werkstoff gefertigt ist,
wobei der erste Trägerrahmenbereich (8) aus Aluminium und der zweite Trägerrahmenbereich (10) aus Kunststoff oder einem Verbundwerkstoff gefertigt ist,
wobei der erste Trägerrahmenbereich (8) aus anderen metallischen Werkstoff und der zweite Trägerrahmenbereich (10) aus Stahl gefertigt ist,
wobei der erste Trägerrahmenbereich (8) aus einem anderen metallischen Werkstoff und der zweite Trägerrahmenbereich (10) aus Aluminium gefertigt ist,
wobei der erste Trägerrahmenbereich (8) aus einem anderen metallischen Werkstoff und der zweite Trägerrahmenbereich (10) aus Kunststoff oder einem Verbundwerkstoff gefertigt ist,
wobei der erste Trägerrahmenbereich (8) aus Kunststoff oder einem Verbundwerkstoff und der zweite Trägerrahmenbereich (10) aus Stahl gefertigt ist,
wobei der erste Trägerrahmenbereich (8) aus Kunststoff oder einem Verbundwerkstoff und der zweite Trägerrahmenbereich (10) aus Aluminium gefertigt ist,
wobei der erste Trägerrahmenbereich (8) aus einem Kunststoff oder einem Verbundwerkstoff und der zweite Trägerrahmenbereich (10) aus einem anderen metallischen Werkstoff gefertigt ist.

11. Trägerrahmendichtung (4) gemäß einem der vorstehenden Ansprüche,
wobei der erste Trägerrahmenbereich (8) und der zweite Trägerrahmenbereich (10) über einen durchgehenden Steg miteinander verbunden sind, und wobei das Dichtprofil (14) bzw. die Dichtlippen (16) jeweils in kanalförmigen Vertiefungen verlaufen, oder
wobei der erste Trägerrahmenbereich (8) und der zweite Trägerrahmenbereich (10) über Stege (20) miteinander verbunden sind, wobei die Stege (20) bevorzugt schräg zu dem Dichtprofil (14) bzw. den Dichtlippen (16) verlaufen.

12. Trägerrahmendichtung (4) gemäß einem der vorstehenden Ansprüche,
wobei das Dichtprofil (14) stirnseitig an dem Trägerrahmen (6) bzw. an dem ersten Trägerrahmenbereich (8) bzw. dem zweiten Trägerrahmenbereich (10) bzw. an beiden, dem ersten und dem zweiten Trägerrahmenbereich (8, 10), anvulkanisiert oder angespritzt ist.

13. Trägerrahmendichtung (4) gemäß einem der vorstehenden Ansprüche,
wobei der zweite Trägerrahmenbereich (10) aus Stahl gefertigt ist und eine Dichtsicke (24), oder ein Filterelement (26) umfasst.

## Claims

1. A carrier frame seal (4), comprising:
a carrier frame (6), having at least one first carrier frame region (8) and one second carrier frame region (10).
wherein a channel region (12) is constructed in a region between the first carrier frame region (8) and the second carrier frame region (10);
further comprising a sealing profile (14), which is arranged at least to some extent between the first carrier frame region (8) and the second carrier frame region (10) in the channel region (12), and wherein the sealing profile (14) is connected on one side to the first or the second carrier frame region (8, 10) outside the channel region (12), and
wherein a width (K) of the channel region (12) is larger than a width (B) of the sealing profile (14) outside the channel region (12),
wherein
a) in the channel region (12), the sealing profile is connected on one side only to the first carrier frame region (8) or only to the second carrier frame region (10), wherein the sealing profile does not fill the entire channel with the width thereof, and wherein a width (B) of the sealing profile (14) in the channel region (12) is larger than the width (B') of the sealing profile (14) outside of the channel region (12)
and/or wherein
b) the sealing profile (14) comprises at least two sealing lips (16), and wherein a space (A) between the at least two sealing lips (16) is larger in the channel region (12) than outside the channel region (18).

2. The carrier frame seal (4) according to Claim 1, wherein, if the sealing profile (14) comprises at least two sealing lips (16) and a space (A) between the at least two sealing lips (16) in the channel region (12) is larger than outside the channel region (18),
the sealing profile in the channel region (12) is connected on one side to the first carrier frame region (8) and is connected on the other side to the second carrier frame region (10).

3. The carrier frame seal (10) according to Claim 1,
wherein a space (A) between the two sealing lips (16) in the channel region (12) is one-and-a-half-times to twice as large, preferably twice as large, as a space (A') between two sealing lips (16) outside of the channel region (112).

4. The carrier frame seal (10) according to one of the preceding claims, wherein, if the sealing profile (14) comprises at least two sealing lips (16), and if a space (A) between the at least two sealing lips (16) in the channel region (12) is larger than outside the channel region (18), a width (B) of the sealing profile (14) in the channel region (12) is larger than the width (B') of the sealing profile (14) outside of the channel region (12).

5. The carrier frame seal (10) according to Claim 4,
wherein the width of the sealing profile in the channel region (18) is 1.2-times to two-and-a-half-times as large, preferably approximately 1.3-times to twice as large, and further preferably approximately 1.4-times to one-and-a-half-times as large as a width of the sealing profile (B') outside of the channel region (18).

6. The carrier frame seal (10) according to one of the preceding claims,
wherein the sealing lip (16) or the sealing lips (16) are built in a symmetrical manner in cross section.

7. The carrier frame seal (10) according to Claim 6,
wherein free spaces (C, D) in the sealing profile are realized to be equally wide next to the sealing lip (16) or next to the sealing lips (16).

8. The carrier frame seal (10) according to one of the preceding claims,
wherein the sealing lip (16) or the sealing lips (16) are built in an asymmetrical manner in cross section.

9. The carrier frame seal (10) according to Claim 8,
wherein free spaces (C, D) in the sealing profile (14) have a different width next to the sealing lip (16) or next to the sealing lips (16) in each case.

10. The carrier frame seal (4) according to one of the preceding claims,
wherein the carrier frame (6) is manufactured from steel, or
wherein the carrier frame (6) is manufactured from aluminium, or
wherein the carrier frame (6) is manufactured from materials different from steel or aluminium,
wherein the carrier frame (6) is manufactured from plastic or a composite material, or
wherein the first carrier frame region (8) is manufactured from steel and the second carrier frame region (10) is manufactured from aluminium,
wherein the first carrier frame region (8) is manufactured from steel and the second carrier frame region (10) is manufactured from a different metallic material,
wherein the first carrier frame region (8) is manufactured from steel and the second carrier frame region (10) is manufactured from plastic or a composite material,
wherein the first carrier frame region (8) is manufactured from steel and the second carrier frame region (10) is manufactured from aluminium,
wherein the first carrier frame region (8) is manufactured from aluminium and the second carrier frame region (10) is manufactured from steel,
wherein the first carrier frame region (8) is manufactured from aluminium and the second carrier frame region (10) is manufactured from a different metallic material,
wherein the first carrier frame region (8) is manufactured from aluminium and the second carrier frame region (10) is manufactured from plastic or a composite material,
wherein the first carrier frame region (8) is manufactured from different metallic material and the second carrier frame region (10) is manufactured from steel,
wherein the first carrier frame region (8) is manufactured from a different metallic material and the second carrier frame region (10) is manufactured from aluminium,
wherein the first carrier frame region (8) is manufactured from a different metallic material and the second carrier frame region (10) is manufactured from plastic or a composite material,
wherein the first carrier frame region (8) is manufactured from plastic or a composite material and the second carrier frame region (10) is manufactured from steel,
wherein the first carrier frame region (8) is manufactured from plastic or a composite material and the second carrier frame region (10) is manufactured from aluminium,
wherein the first carrier frame region (8) is manufactured from a plastic or a composite material and the second carrier frame region (10) is manufactured from a different metallic material.

11. The carrier frame seal (4) according to one of the preceding claims,
wherein the first carrier frame region (8) and the second carrier frame region (10) are connected to one another by means of a continuous web, and wherein the sealing profile (14) or the sealing lips (16) run in channel-shaped depressions in each case, or
wherein the first carrier frame region (8) and the second frame region (10) are connected to one another by means of webs (20), wherein the webs (20) preferably run obliquely to the sealing profile (14) or the sealing lips (16).

12. The carrier frame seal (4) according to one of the preceding claims,
wherein the sealing profile (14) is vulcanized or sprayed at the end on the carrier frame (6) or on the first carrier frame region (8) or the second carrier frame region (10) or on both the first and the second carrier frame region (8, 10).

13. The carrier frame seal (4) according to one of the preceding claims,
wherein the second carrier frame region (10) is manufactured from steel and comprises a sealing bead (24) or a filter element (26).

## Revendications

1. Joint d'étanchéité à cadre support (4), comprenant :
un cadre support (6), comportant au moins une première zone de cadre support ((8) et une deuxième zone de cadre support (10),
dans lequel dans une zone entre la première zone de cadre support (8) et la deuxième zone de cadre support (10) une zone de canal (12) est réalisée ;
comprenant en outre un profilé d'étanchéité (14), qui est disposé au moins partiellement entre la première zone de cadre support (8) et la deuxième zone de cadre support (10) dans la zone de canal (12) et dans lequel le profilé d'étanchéité (14) est relié à l'extérieur de la zone de canal (12) d'un côté avec la première ou la deuxième zone de cadre support (8, 10) et
dans lequel une largeur (K) de la zone de canal (12)est plus grande qu'une largeur (B) du profilé d'étanchéité (14) à l'extérieur de la zone de canal (12), dans lequel
a) le profilé d'étanchéité dans la zone de canal (12) est relié sur un côté seulement avec la première zone de cadre support (8) ou seulement avec la deuxième zone de cadre support (10), dans lequel le profilé d'étanchéité ne remplit pas la totalité du canal avec sa largeur, et dans lequel une largeur (B) du profilé d'étanchéité (14) dans la zone de canal (12) est plus grande que la largeur (B') du profilé d'étanchéité (14) à l'extérieur de la zone de canal (12)
et/ou dans lequel
b) le profilé d'étanchéité (14) comprend au moins deux lèvres d'étanchéité (16), et dans lequel un espacement (A) entre au moins deux lèvres d'étanchéité (16) dans la zone de canal (12) est plus grand qu'à l'extérieur de la zone de canal (18).

2. Joint d'étanchéité à cadre support (4) selon la revendication 1, dans lequel lorsque le profilé d'étanchéité (14) comprend au moins deux lèvres d'étanchéité (16) et un espacement (A) entre au moins deux lèvres d'étanchéité (16) dans la zone de canal (12) est plus grand qu'à l'extérieur de la zone de canal (18),
le profilé d'étanchéité dans la zone de canal (12) est relié sur un côté avec la première zone de cadre porteur (8) et sur l'autre côté avec la deuxième zone de cadre porteur (10).

3. Joint d'étanchéité à cadre support (10) selon la revendication 1,
dans lequel un espacement (A) entre les deux lèvres d'étanchéité (16) dans la zone de canal (12) est une fois et demie à deux fois à demie, de référence environ deux fois plus grand qu'un espacement (A') entre deux lèvres d'étanchéité (16) à l'extérieur de la zone de canal (112).

4. Joint d'étanchéité à cadre support (10) selon une des revendications précédentes, dans lequel lorsque le profilé d'étanchéité (14) comprend au moins deux lèvres d'étanchéité (16) et lorsqu'un espacement (A) entre au moins deux lèvres d'étanchéité (16) dans la zone de canal (12) est plus grand qu'à l'extérieur de la zone de canal (18), une largeur (B) du profilé d'étanchéité (14) dans la zone de canal (12) est plus grand que la largeur (B') du profilé d'étanchéité (14) à l'extérieur de la zone de canal (12).

5. Joint d'étanchéité à cadre support (10) selon la revendication 4,
dans lequel la largeur du profilé d'étanchéité dans la zone de canal (18) est 1,2 fois à deux fois et demie plus grande, de préférence environ 1,3 fois à deux fois plus grande, et de manière encore préférée environ 1,4 fois à une fois et demie plus grande qu'une largeur du profilé d'étanchéité (B') à l'extérieur de la zone de canal (18).

6. Joint d'étanchéité à cadre support (10) selon une des revendications précédentes,
dans lequel la lèvre d'étanchéité (16) ou les lèvres d'étanchéité (16) ont une structure symétrique en coupe transversale.

7. Joint d'étanchéité à cadre support (10) selon la revendication 6,
dans lequel des espaces libres (C, D) dans le profilé d'étanchéité à côté des lèvres d'étanchéité (16) ou à côté des lèvres d'étanchéité (16) sont configurés avec une largeur identique.

8. Joint d'étanchéité à cadre support (10) selon une des revendications précédentes,
dans lequel la lèvre d'étanchéité (16) ou les lèvres d'étanchéité (16) ont une structure asymétrique en coupe transversale.

9. Joint d'étanchéité à cadre support (10) selon la revendication 8,
dans lequel des espaces libres (C, D) dans le profilé d'étanchéité (14) à côté des lèvres d'étanchéité (16) ou à côté des lèvres d'étanchéité (16) présentent respectivement une largeur différente.

10. Joint d'étanchéité à cadre support (4) selon une des revendications précédentes, dans lequel
le cadre support (6) est fabriqué en acier, ou
le cadre support (6) est fabriqué en aluminium, ou
le cadre support (6) est fabriqué à partir d'autres matériaux métalliques que l'acier ou l'aluminium,
le cadre support (6) est fabriqué en plastique ou en matériau composite, ou
la première zone de cadre support (8) est fabriquée en acier et la deuxième zone de cadre support (10) est fabriquée en aluminium,
la première zone de cadre support (8) est fabriquée en acier et la deuxième zone de cadre support (10) est fabriquée dans un autre matériau métallique,
la première zone de cadre support (8) est fabriquée en acier et la deuxième zone de cadre support (10) est fabriquée en plastique ou en matériau composite,
la première zone de cadre support (8) est fabriquée en acier et la deuxième zone de cadre support (10) est fabriquée en aluminium,
la première zone de cadre support (8) est fabriquée en aluminium et la deuxième zone de cadre support (10) est fabriquée en acier,
la première zone de cadre support (8) est fabriquée en aluminium et la deuxième zone de cadre support (10) est fabriquée dans un autre matériau métallique,
la première zone de cadre support (8) est fabriquée en aluminium et la deuxième zone de cadre support (10) est fabriquée en plastique ou en matériau composite,
la première zone de cadre support (8) est fabriquée dans un autre matériau métallique et la deuxième zone de cadre support (10) est fabriquée en acier,
la première zone de cadre support (8) est fabriquée dans un autre matériau métallique et la deuxième zone de cadre support (10) est fabriquée en aluminium,
la première zone de cadre support (8) est fabriquée dans un autre matériau métallique et la deuxième zone de cadre support (10) est fabriquée en plastique ou en matériau composite,
la première zone de cadre support (8) est fabriquée en plastique ou en matériau composite et la deuxième zone de cadre support (10) est fabriquée en acier,
la première zone de cadre support (8) est fabriquée en plastique ou en matériau composite et la deuxième zone de cadre support (10) est fabriquée en aluminium,
la première zone de cadre support (8) est fabriquée en plastique ou en matériau composite et la deuxième zone de cadre support (10) est fabriquée dans un autre matériau métallique.

11. Joint d'étanchéité à cadre support (4) selon une des revendications précédentes,
dans lequel la première zone de cadre support (8) et la deuxième zone de cadre support (10) sont reliées l'une à l'autre par l'intermédiaire d'un gradin continu et dans lequel le profilé d'étanchéité (14) respectivement les lèvres d'étanchéité (16) s'étendent respectivement dans des cavités en forme de canal, ou
dans lequel la première zone de cadre support (8) et la deuxième zone de cadre support (10) sont reliés l'une à l'autre par l'intermédiaire de gradins (20), dans lequel les gradins (20) s'étendent de préférence en oblique par rapport au profilé d'étanchéité (14) respectivement aux lèvres d'étanchéité (16).

12. Joint d'étanchéité à cadre support (4) selon une des revendications précédentes,
dans lequel le profilé d'étanchéité (14) est vulcanisé ou moulé par injection du côté frontal sur le cadre support (6), respectivement sur la première zone de cadre support (8) ou la deuxième zone de cadre support (10) ou sur les deux, la première et la deuxième zone de cadre support (8, 10).

13. Joint d'étanchéité à cadre support (4) selon une des revendications précédentes,
dans lequel la deuxième zone de cadre support (10) est fabriquée en acier et comprend un bourrelet d'étanchéité (24) ou un élément de filtre (26).
